# EUROPEAN PATENT SPECIFICATION

(11) **EP 3 706 408 B1**
(45) Date of publication and mention of the grant of the patent: **01.05.2024**
(21) Application number: 20160534.2
(22) Date of filing: 03.03.2020
(51) Int. Cl.: H04N 5/32, H04N 25/772

(54) **RADIATION DETECTOR AND RADIATION DETECTION METHOD**
STRAHLUNGSDETEKTOR UND STRAHLUNGSDETEKTIONSVERFAHREN
CAPTEUR DE RADIATION ET PROCÉDÉ DE DÉTECTION ASSOCIÉ

(30) Priority: 04.03.2019 JP 2019038908
(43) Date of publication of application: 09.09.2020
(73) Proprietor: Rigaku Corporation, Akishima-shi Tokyo 196-8666 (JP)
(72) Inventor: SAKUMA, Yasutaka, Akishima-shi, Tokyo 196-8666 (JP); SAKUMURA, Takuto, Akishima-shi, Tokyo 196-8666 (JP)
(74) Representative: Lambacher, Michael

(56) References cited:
- DE-A1-102014 223 175
- JP-A- S6 457 189
- US-A1- 2013 228 693
- KRAFT P ET AL: "Performance of single-photon-counting PILATUS detector modules", JOURNAL OF SYNCHROTRON RADIATION, WILEY-BLACKWELL MUNKSGAARD, DK, vol. 16, no. 3, 1 May 2009 (2009-05-01), pages 368-375, XP002632471, ISSN: 0909-0495, DOI: 10.1107/S0909049509009911

## Description

### TECHNICAL FIELD

The present invention relates to a radiation detector that detects radiation to transfer detection data to an external apparatus for each frame, and a radiation detection method thereof.

### RELATED ART

Conventionally, known is a photon counting type semiconductor detector used for radiation measurements (Patent Document 1). The radiation detector disclosed in the patent document 1, that is used as an inspection apparatus for a single crystal analyzer and a production line makes an exposure state where the radiation is continuously made incident be maintainable by switching a plurality of counters provided so as to be able to count pulses when receiving a synchronization signal from an external apparatus.

Then, the radiation detector as described above is provided with only one memory (Refer to FIG. 1 of Patent Document 1). Thus, at normal measurement time, a frame rate is determined by operating time of the memory, and the total time of time during which the memory reads a count value from ROIC, and time of transferring the count value to PC from the memory becomes one period. Then, an interval between the end of exposure and the next exposure, that is, the minimum interval time of exposure becomes time obtained by subtracting the exposure time from the sum of time of reading the count value and transfer time.

From US 2013/228693 A1 an image sensor module is known which is configured to perform parallel mode readout of a pixel array. The image sensor module comprises a two-dimensional pixel array, wherein each pixel within the pixel array comprises a sensor configured to capture an electrical signal representing a photon detection, a counter configured to count a photon detection of each respective pixel within the pixel array, a plurality of column bus lines, respectively connecting all pixels in each of the columns, and a vertical shift register having a plurality of parallel outputs for sequentially selecting the rows of pixels for readout over the column bus lines at the sensor output.

Still further, from DE 10 2014 223 175 A1 a radiation detector is known capable of detecting radiation without having any noticeable dead time of exposure by providing a plurality of counters for each detection unit as well as a switch, which switches between the plurality of counters.

### PRIOR ART DOCUMENT

### PATENT DOCUMENT

Patent Document 1: Japanese Patent No. 6182758

### SUMMARY OF THE INVENTION

However, according to the radiation detector as described above, the frame rate depends on reading and transferring performance of the memory, and thus there are limits to the improvement thereof. For example, when performing measurements for confirming a transitional phenomenon at synchrotron radiation facilities, the frame rate does not follow, and no sufficient result can be obtained.

The present invention has been made in view of such a situation, and it is an object to provide a radiation detector capable of shortening time for a series of exposure, reading and transferring operations, and of improving the frame rate; and to provide a radiation detection method thereof.

A radiation detector according to the present invention is set out in claim 1. A radiation detection method for detecting radiation is set out in claim 5.

According to the present invention, time for a series of exposure, reading and transferring operations can be shortened, and thus the frame rate can be improved.

### BRIEF DESCRIPTION OF THE DRAWINGS

FIG. 1 is a schematic diagram showing a constitution of a radiation detector according to the first embodiment.
FIGS. 2A to 2C are schematic diagrams each showing an operation of a conventional radiation detector.
FIGS. 3A to 3C are schematic diagrams each showing an operation of a radiation detector according to the first embodiment.
FIGS. 4A to 4C are schematic diagrams each showing an operation of a radiation detector according to the first embodiment.
FIG. 5 is a flowchart showing an operation of a radiation detector according to the first embodiment.
FIGS. 6A and 6B each show a timing chart of each operation, according to a conventional radiation detector and a radiation detector relating to the first embodiment, respectively.
FIGS. 7A and 7B are schematic diagrams each showing an operation of a radiation detector using a ring buffer.
FIGS. 8A to 8C are schematic diagrams each showing an operation of a radiation detector according to the first embodiment.
FIGS. 9A to 9C are schematic diagrams each showing an operation of a radiation detector according to the second embodiment.
FIG. 10 is a plan view showing a configuration of an X-ray analysis apparatus according to the third embodiment.
FIG. 11 is a side view showing a configuration of an X-ray analysis apparatus according to the fourth embodiment.
FIG. 12 is a schematic diagram showing a configuration of a radiation detector according to the fifth embodiment.
FIGS. 13A to 13D are schematic diagrams each showing an operation of a radiation detector according to the fifth embodiment.
FIG. 14 shows a timing chart of an operation of a radiation detector according to the fifth embodiment.
FIGS. 15A and 15B each show a timing chart of each operation, according to a conventional radiation detector and a radiation detector relating to the fifth embodiment, respectively.
FIGS. 16A and 16B are graphs showing scattering intensity and autocorrelation function thereof with respect to time, respectively, that are measured by a conventional detector.
Fig. 17 is a graph showing a region where T is small, according to the autocorrelation function.
FIGS. 18A and 18B are graphs showing scattering intensity and autocorrelation function thereof with respect to time, respectively, that are measured by a detector according to the present invention.
FIG. 19 is a diagram showing an example of a filling pattern in a storage ring.
FIG. 20 is a diagram showing detection current with respect to time.
FIG. 21 is a diagram showing X-ray intensity peaks detected when using two memories with respect to a filling pattern.

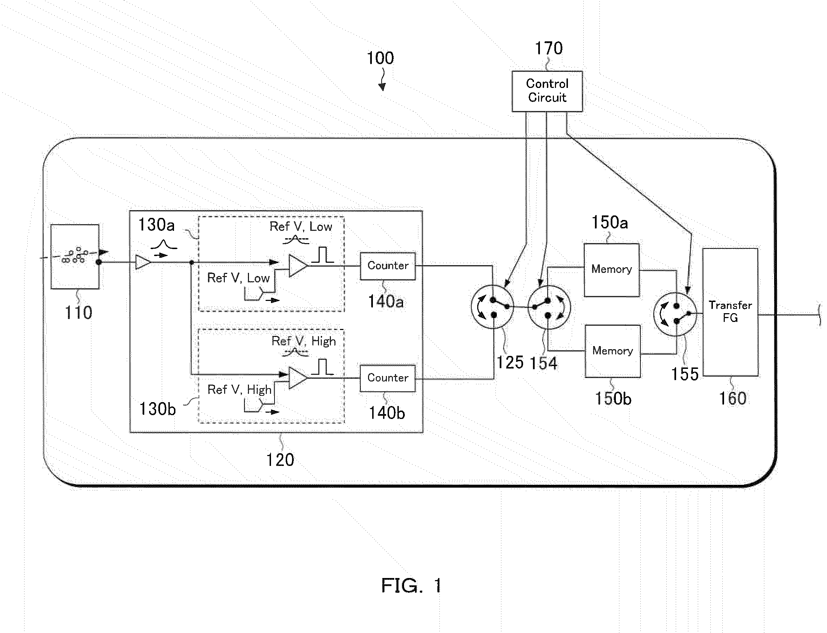

The following figures 1, 3A-5, 6B, 8A-14, 15B-21 are according to the invention.

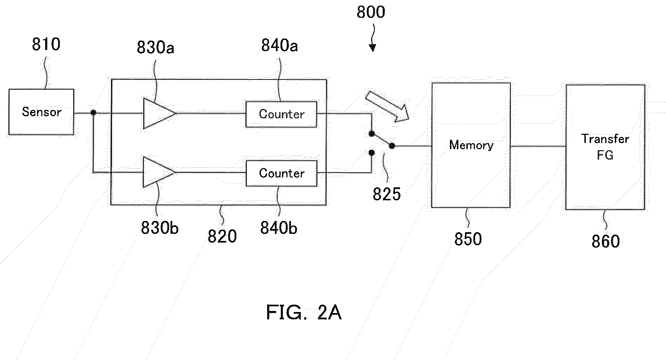

The following figures 2A-2C, 6A, 7A-7B, 15A are not according to the invention and are present for illustration purposes only.

### DETAILED DESCRIPTION OF EMBODIMENTS

Next, embodiments of the present invention are described referring to the drawings. In order to facilitate understanding of the description, the same numeral reference numerals are used for the same constituent elements, and parallel processing descriptions are omitted in each drawing.

### [First embodiment]

### (Constitution of radiation detector)

FIG. 1 is a schematic diagram showing a constitution of a radiation detector 100. The radiation detector 100 that is a photon counting type semiconductor detector has a two-dimensional data buffer function. The radiation detector 100 detects radiation to transfer detection data to the external apparatus for every frame. As described in the after-mentioned application examples, the radiation detector is suitable to perform a function when the radiation for detection is X-rays, however the radiation for detection may not be limited thereto, and may be α-rays, β-rays, γ-rays, neutron-rays, etc. In addition, the radiation detector 100 may be a one-dimensional detector.

As shown in FIG. 1, the radiation detector 100 includes a sensor 110, a readout circuit 120, a plurality of memories 150a and 150b, switching circuits 125, 154 and 155, a transfer circuit 160, and a control circuit 170. In addition, a configuration for one sensor 110 is conveniently shown in FIG. 1, however the radiation detector 100 is basically provided with a plurality of sensors. The readout circuit 120 has a function of reading pulses, and further in detail includes a plurality of detection circuits 130a and 130b, and a plurality of counters 140a and 140b.

The sensor 110 generates pulses when radiation particles are detected. The sensor 110 can detect intensity of an X-ray flux that is incident on a receiving surface as two dimensional information. The detection circuits 130a and 130b determine whether or not pulses are higher than respective reference values, and when higher, send them out to counters 140a and 140b as voltage signals. According to an example shown in FIG. 1, the reference value of the detection circuit 130a is set to be lower than the reference value of the detection circuit 130b, however higher setting is also allowed.

The counters 140a and 140b each can count pulses. The memories 150a and 150b read and store count values generated by the counters 140a and 140b, from the counters 140a and 140b. The readout timing depends on switching performed by the control circuit 170. Basically, readout is started from the counters 140a and 140b that have most recently finished counting, however the readout can be also started after waiting time. The memories 150a and 150b convert unaligned data having been read into the real space arrangement, and enable transferring the data to the rear stage.

A plurality of the memories 150a and 150b each are independent of each other, and writing and reading of the same address cannot be simultaneously performed. Accordingly, the radiation detector can be formed compact, and thus costs of the configuration can also be reduced. Further, there is also provided assurance for not having rewritten the data. Neither a ring buffer nor a QDR memory is used for the memories 150a and 150b (Details to be mentioned later).

In addition, two or more switchable memories are needed for writing with respect to one sensor. When a plurality of sensors are provided, the plurality of memories may be provided independently for respective sensors, however the plurality of memories may be shared. For example, it is effective enough if only two memories are provided for two sensors and the two memories are switchable for writing from each of the sensors.

The switching circuits 125 and 154 each perform a switching operation for reading the count values. The switching circuit 155 performs a switching operation for transferring the count values. Any of them is operated by a control signal.

The control circuit 170 controls connecting of the switching circuits 125, 154 and 155; controls reading and storing of the count values; and controls transferring the stored count values to the external apparatus. The control circuit 170 performs reading and transferring of the count values in an parallel processing time period, using different memories among the plurality of memories 150a and 150b. In this manner, there is time when reading and transferring of the count values of different frames are simultaneously performed, and thus time for a series of exposure, reading and transferring operations can be shortened, and the frame rate can be improved. The control circuit may perform switching of a counter to count pulses among a plurality of counters at a timing of receiving a trigger signal from an external apparatus, and perform continuous exposure (Details to be mentioned later).

### (Operation of radiation detector)

### (1) Conventional operation

FIGS. 2A to 2C are schematic diagrams each showing an operation of a conventional radiation detector 800. As shown in FIGS. 2A to 2C, a conventional radiation detector 800 includes a sensor 810, a readout circuit 820, a switching circuit 825, a memory 850, and a transfer circuit 860. The readout circuit 820 further includes detection circuits 830a and 830b, and counters 840a and 840b.

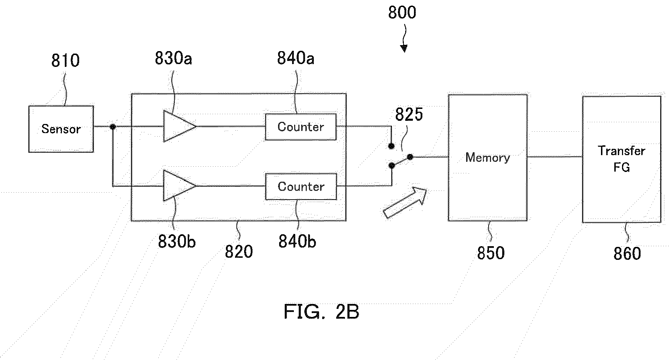

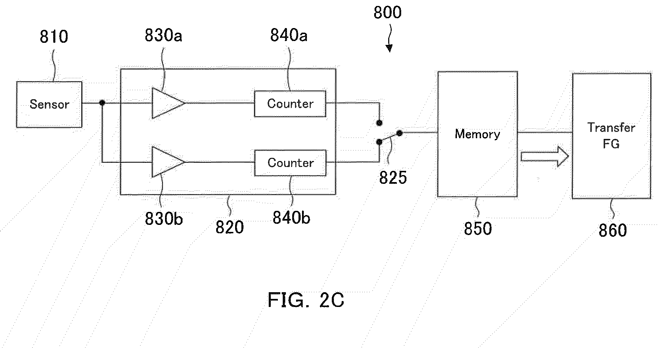

The radiation detector 800 has only one memory 850, and thus count values from each of the counters 840a and 840b are read out with the memory 850 via circuit-switching, as shown in FIGS. 2A and 2B. Count values of the frame simultaneously acquired are received by one memory 850 via the counter-switching. Next, as shown in FIG. 2C, the count values are transferred to the transfer circuit 860 from the memory 850. The above-described operation is repeated.

In such a case, it is impossible to read count values of the next frame to the memory 850 while transferring the count values of one frame from the memory 850, and thus reading and transferring need to be alternately performed.

### (2) Operation according to the present invention

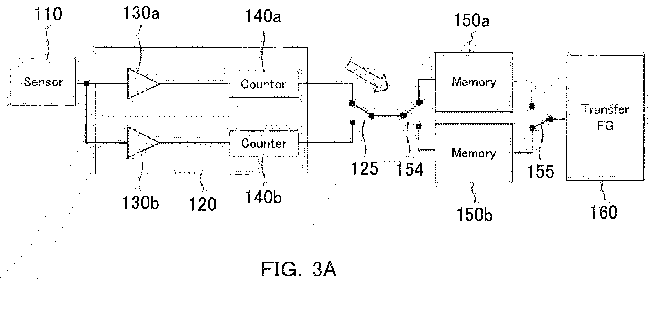

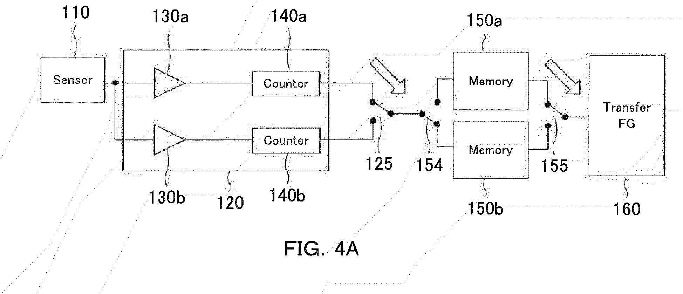

In contrast, the radiation detector 100 is provided with two memories 150a and 150b, and can perform reading and transferring at the same time. FIGS. 3A to 3C and FIGS. 4A to 4C are schematic diagrams each showing a series of operations of a radiation detector.

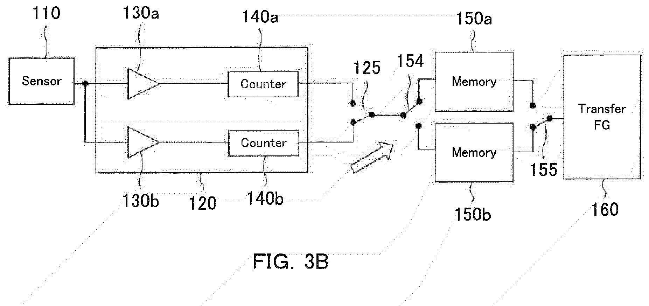

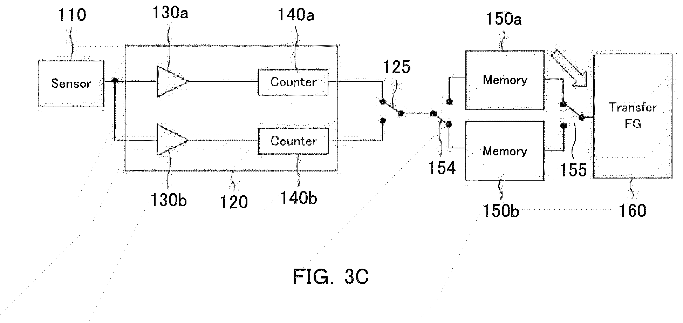

As shown in FIGS. 3A and 3B, the memory 150a first reads count values from counters 140a and 140b. In this case, the counters 140a and 140b are switched by a switching circuit 125. Then, as shown in FIG. 3C, the memory 150a transfers the count values to a transfer circuit 160 by switching a switching circuit 155. It is made possible to read the count values to the memory 150b from the counter 140a by switching a switching circuit 154 at the same time.

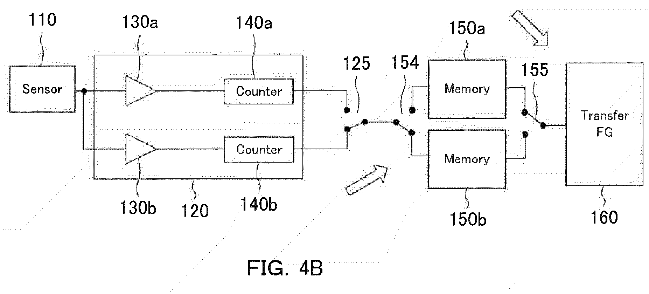

Next, as shown in FIGS. 4A and 4B, the memory 150b reads count values of a new frame from the counters 140a and 140b, while the memory 150a transfers the count values to the transfer circuit 160. The counters 140a and 140b are switched by the switching circuit 125. At this time, transferring and reading can be performed at the same time.

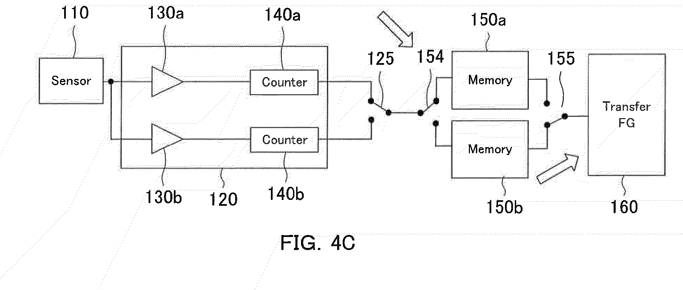

Then, as shown in FIG. 4C, the switching circuits 154 and 155 are switched. In this manner, count values are transferred to the transfer circuit 160 from the memory 150b. It is made possible to read the count value to the memory 150a from the counter 140a at the same time. It can be simultaneously performed to transfer and read data by repeating the above-described operation, and thus frame processing can be made effective.

### (Flowchart)

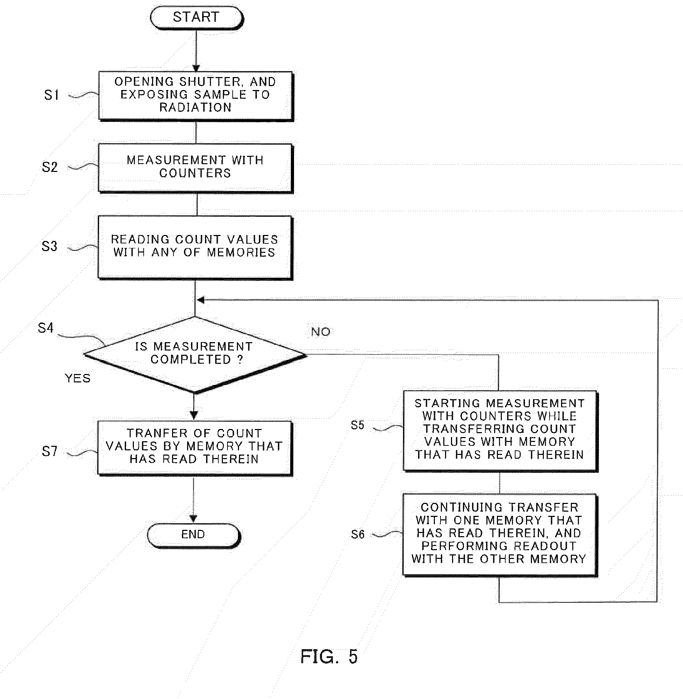

The operation of the above-described radiation detector 100 is explained with a flowchart. FIG. 5 is the flowchart showing an operation of the radiation detector 100. First, a shutter is opened, and a sample is exposed to radiation (step S1). Pulses are generated by detecting particles of radiation that is incident on a detection plane with the sensor 110. Then, the measurement is started by counting the pulses of radiation with the counters 140a and 140b (step S2). It is started to read count data from the counters 140a and 140b by which counting is completed, with any of the memories 150a and 150b (step S3).

Next, branching is made based on whether or not the measurement has been completed (step S4), and when the measurement is not completed, as shown in FIG. 3C, the counters 140a and 140b start counting count values of the next frame, while transferring the count values with the memory 150a that has read therein (step S5). After counting is completed by the counters 140a and 140b, as shown in FIGS. 4A and 4B, the other memory 150b reads count values from the counters 140a and 140b, while continuing transfer with a memory 150a that has read the count (step S6), and this is returned to step S4.

In step S4, when the measurement is completed, the memory 150b that has lastly read count values transfers the count values (step S7), and a series of the operations is completed. In addition, it is also possible that the above-described operations are carried out via an external PC, for example, however they are preferably carried out via a circuit inside the radiation detector 100.

### (Timing chart)

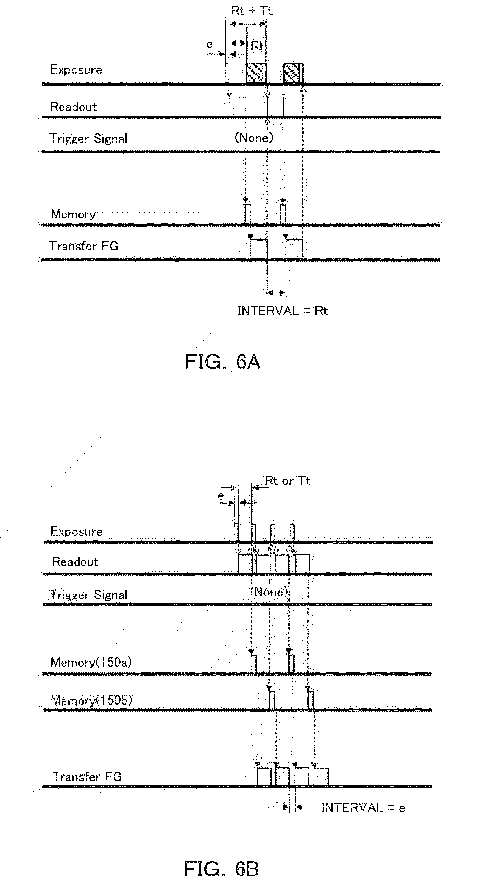

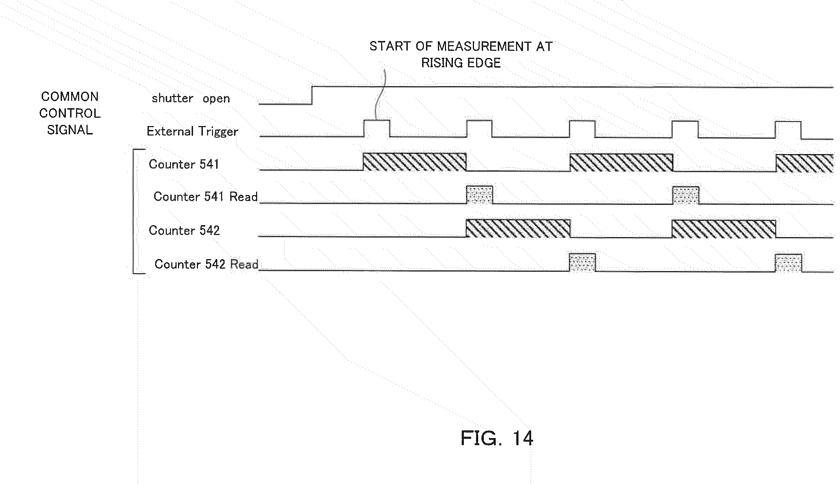

Such operations are explained in comparison with conventional operations, using a timing chart. FIG. 6A shows a timing chart of each operation according to a conventional radiation detector. In FIG. 6A, a vertical axis represents various functions, and a horizontal axis represents time (The same thing also applied to FIGS. 14A and 14B).

### (1) Conventional circuit

The conventional circuit is provided with only one memory for one radiation detector. In FIG. 6A, when a control signal from a control circuit exists first, a shutter is opened for exposure, and counting is carried out with counters. After exposure time e is finished, count values obtained by the counters 840a and 840b are read by the memory 850. In this case, readout time is represented by Rt.

"Exposure" represents exposure to radiation, and "e" represents exposure time of each frame. Exposure to the radiation is basically performed by the control signal from the control circuit. As shown in the figure, pulses of the radiation are counted during "e", and the memory 850 simultaneously reads count values after finishing the foregoing time. After finishing the readout, data of the count values is aligned inside the memory 850, and changed to the real space arrangement. Time of aligning this data is displayed in the figure, however is significantly shorter compared with that of the other operation, thereby being negligible. Then, the memory 850 sends the count values to a transfer circuit, and the transfer circuit transfers the count values to an external PC or the like. This transfer time is represented by Tt in the figure. No exposure of the next frame can be performed while the memory 850 is reading. One period of the frame transfer is represented by Rt + Tt, and the frame rate is represented by 1/(Rt + Tt).

### (2) Circuit according to the present invention

FIG. 6B shows a timing chart of each operation according to the radiation detector 100. The radiation detector 100 is provided with the two memories 150a and 150b. When the control signal of the control circuit exists, a shutter is opened for exposure, and counting is performed with the counters 140a and 140b.

Basically, opening/closing of a radiation shutter is performed by the control signal from the control circuit 170. As shown in the figure, pulses of the radiation are counted during "e", and the memory 150a simultaneously reads count values after finishing the foregoing time. The readout time in this case is represented by Rt. After finishing the readout, data of the count values is aligned inside a memory. It can be considered that this time is displayed in the figure, however is significantly shorter compared with that of the other operation, thereby being negligible. Then, the memory sends the count values to a transfer circuit, and the transfer circuit transfers the count values to an external PC or the like. This transfer time is represented by Tt in the figure.

According to the radiation detector 100, the memory 150a can promote exposure of the next frame during the time occupied by the transfer operation. That is, the memory 150b is possible to read the next frame, while the memory 150a transfers the count values. One period of the frame transfer can be shortened to Rt or Tt, and the frame rate becomes 1/(Rt) or 1/(Tt). The minimum interval time of exposure is also applied thereto similarly to one period of the frame transfer.

### (Difference from the case of using Ring Buffer)

The ring buffer (Ring Buffer) indicates one memory region annularly arranged in concept. The ring buffer includes a write pointer and a read pointer that advance clockwise on the ring buffer. The write pointer advances by writing data in a ring buffer via the write pointer. The read pointer advances by reading the data from the ring buffer via the read pointer. Information stored in the ring buffer is divided into a plurality of banks to be managed.

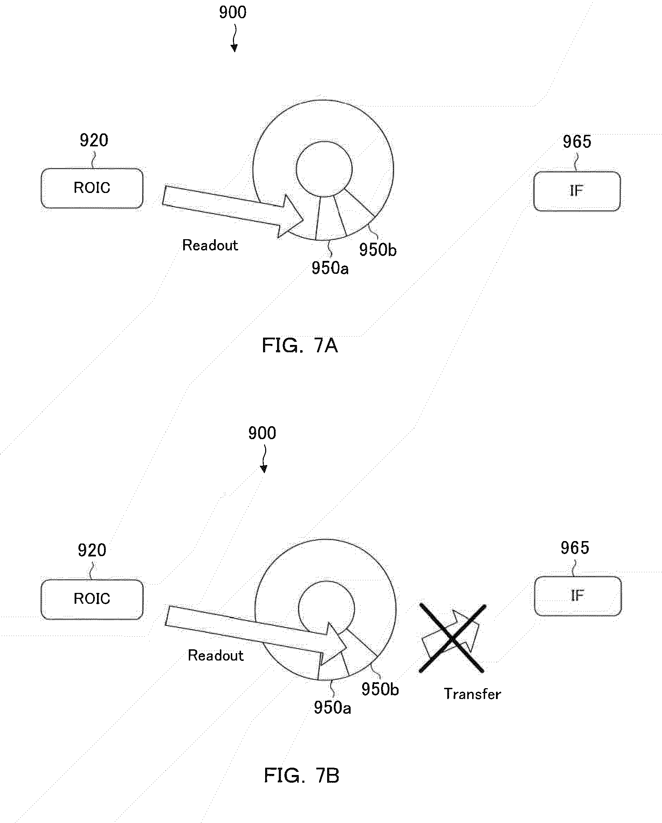

It is studied whether or not a constitution equivalent to that of the radiation detector 100 can be formed by using a ring buffer configured in such a manner. FIGS. 7A and 7B are schematic diagrams each showing an operation of a radiation detector 900 using a ring buffer. The radiation detector 900 includes a readout circuit 920, a memory 950, and an interface 965. The memory 950 that is a ring buffer is provided with banks 950a and 950b.

As shown in FIG. 7A, the first frame is possible to be written in the bank 950a. Further, as shown in FIG. 7B, the second image is possible to be written in the bank 950b. However, basically, writing and reading cannot be simultaneously performed. Accordingly, the memory cannot perform reading and writing at the same time, and the first frame cannot be transferred to the interface 965 from the bank 950a simultaneously with writing into the bank 950b.

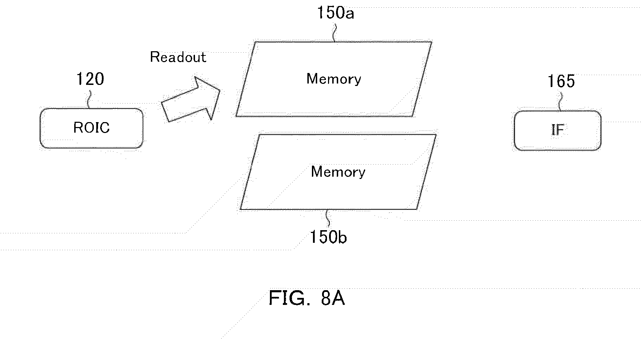

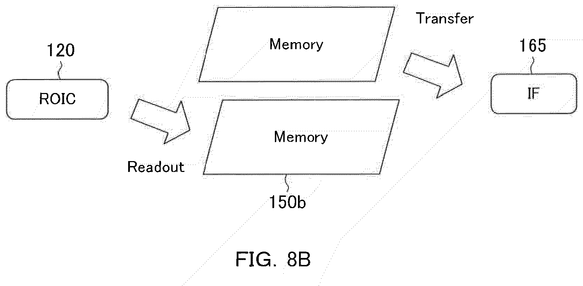

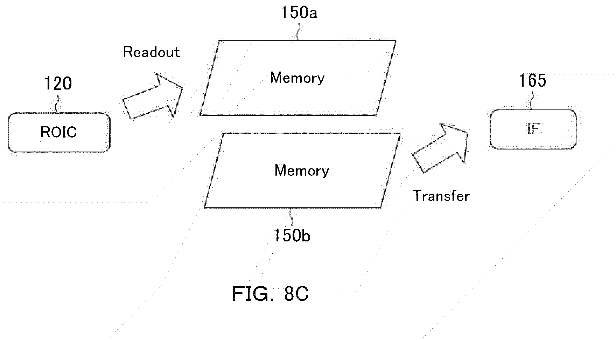

In contrast, the radiation detector 100 is parallelized by physically using a plurality of independent memories. FIGS. 8A to 8C are schematic diagrams each showing an operation of a radiation detector 100. The radiation detector 100 is simply shown as including a readout circuit 120, memories 150a and 150b, and an interface 165. The interface 165 indicates a connection part for connecting the transfer circuit 160 with the external apparatus.

As shown in FIGS. 8A to 8C, the radiation detector 100 transfers the first image to the interface 165 from the memory 150a, while writing the first image into the memory 150a, and writing the second image into the memory 150b. Then, the second image is transferred to the interface 165 from the memory 150b, while writing the third image into the memory 150a. In this way, according to the radiation detector 100, even when accessing one memory for writing, the readout can be made at the other memory.

### (Difference from the case of using QDR memory)

The QDR (Quad Data Rate, Registered Trademark) memory is a random access memory requiring no memory holding operation as a highspeed SRAM for a communication network. The QDR memory can perform reading and writing at the same time.

The same function can be realized even though using QDR memories in place of the memories 150a and 150b, however a special circuit for controlling the QDR memories, for example, an exclusion circuit in such a manner that the same address cannot be used for writing and reading, or the like is required, thereby basically being only available as an external apparatus. Accordingly, when using the QDR memory, fixed substrate area and bus width are required. For example, this is not installable in a housing of a compact radiation detector such as HyPix (Registered Trademark) manufactured by Rigaku Corporation, or the like. Further, when using the QDR memory, necessary information is likely to be rewritten by writing, and thus it is not preferred to apply it to the radiation detector in this respect as well.

### [Second embodiment]

According to the above-described embodiment, two memories are provided, and switching a memory that reads or transfers the count is performed between them, however switching may be performed with three memories or more. In this manner, reading can be successively advanced even when taking a long transfer time, and thus the frame rate is improved. As a result of this, possibility of depending on the transfer time becomes low.

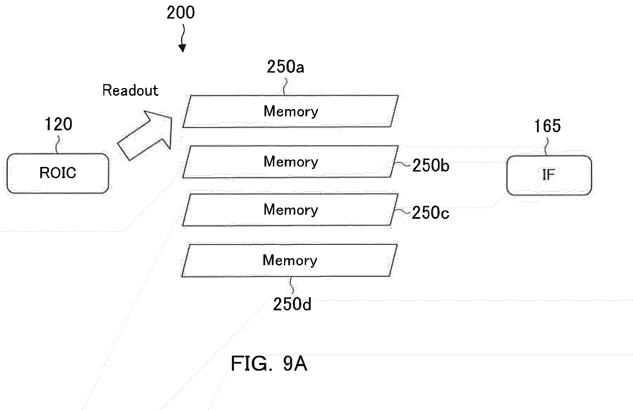

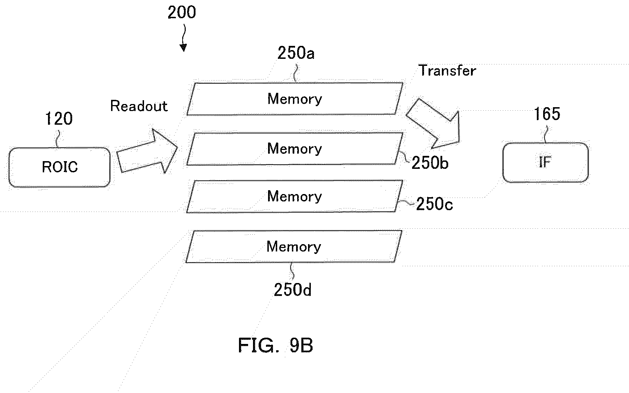

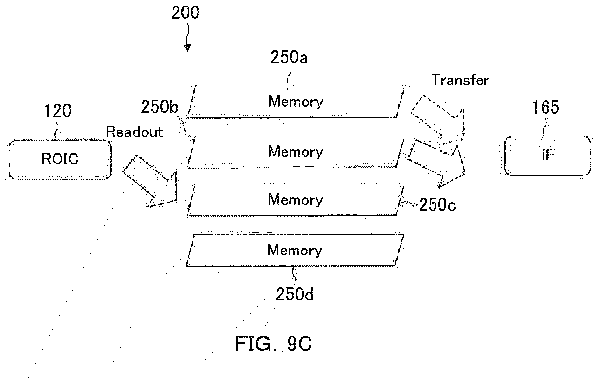

FIGS. 9A to 9C are schematic diagrams each showing an operation of a radiation detector 200 provided with four memories. The radiation detector 200 is simply as including a readout circuit 120, memories 250a to 250d, and an interface 165.

First, the first frame is written into the memory 250a. Next, the first frame is transferred to the interface 165 from the memory 250a, while writing the second frame into the memory 250b. The second frame is transferred to the interface 165 from the memory 250b after completing the transfer from the memory 250a, while writing the third frame into the memory 250c.

In such a manner, when the readout time Rt is shorter compared with the transfer time Tt, the frame rate can be increased up to the time when the transfer time is a bottleneck some time after two or three rounds of readout by the four memories 250a to 250d. As a result of this, possibility of depending on the transfer time becomes low.

### [Third embodiment]

### (Application to single crystal structure analyzer)

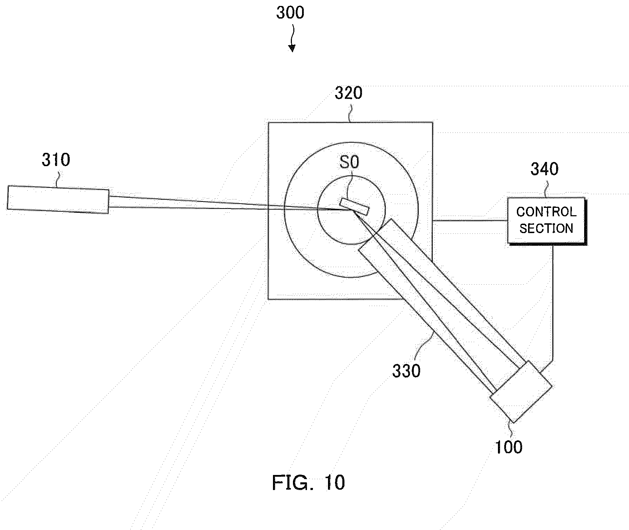

The radiation detector as described above can be assembled in an X-ray analysis apparatus. FIG. 10 is a plan view showing a configuration of an X-ray analysis apparatus 300. The X-ray analysis apparatus 300 is a single crystal structure analyzer for acquiring diffraction X-ray images; and includes an X-ray source 310, a sample stage 320, an arm 330, a control section 340, and a radiation detector 100. X-ray source 310 irradiates X-rays to a sample S0.

The sample stage 320 and the arm 330 are interlocked with each other, and can be rotated around the sample S0 at a constant speed by controlling the control section 340. The radiation detector 100 is provided at an end of the arm 330, and the movement around the sample S0 is controlled together with the arm 330.

The control circuit 170 controls a switching circuit, and switches memories for reading and transferring count values among a plurality of memories 150a and 150b. Thus, the single crystal structure analysis become available with a high time resolution.

### [Fourth embodiment]

### (Application to production line)

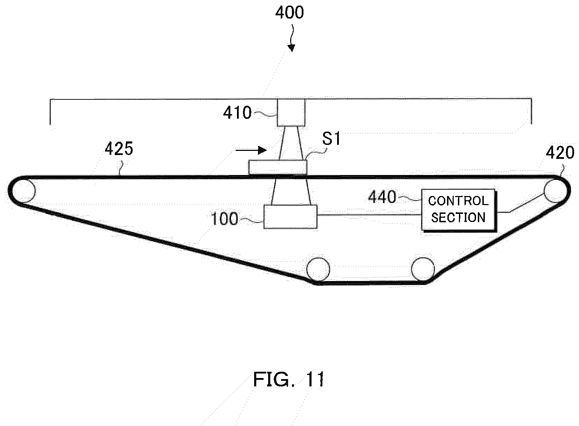

FIG. 11 is a side view showing a configuration of an X-ray analysis apparatus using a radiation detector. The X-ray analysis apparatus 400 is a production line enabling inspection with X-rays, and includes an X-ray source 410, a roller 420, a belt 425, a control section 440, and a radiation detector 100. A product S1 is continuously exposed to X-rays via the shutterless X-ray source 410.

The belt 425 is moved by rotating the roller 420 to transfer the product S1 in an arrow direction of the figure. The belt 425 is moved at a constant speed by controlling the control section 440. The radiation detector 100 is provided on the opposite side of the X-ray source 410 across the belt 425 and the product S1, and it is controlled to transfer the product S1 together with the belt 425.

The X-ray analysis apparatus 400 that includes the radiation detector 100 as described above, for example, can acquire images of the product S1 by receiving a control signal in accordance with a moving speed thereof from the control section 440. In this case, the frame rate can be increased, and thus processing efficiency in the process can be improved, while increasing the moving speed of the product.

### [Fifth embodiment]

### [Configuration of radiation detector]

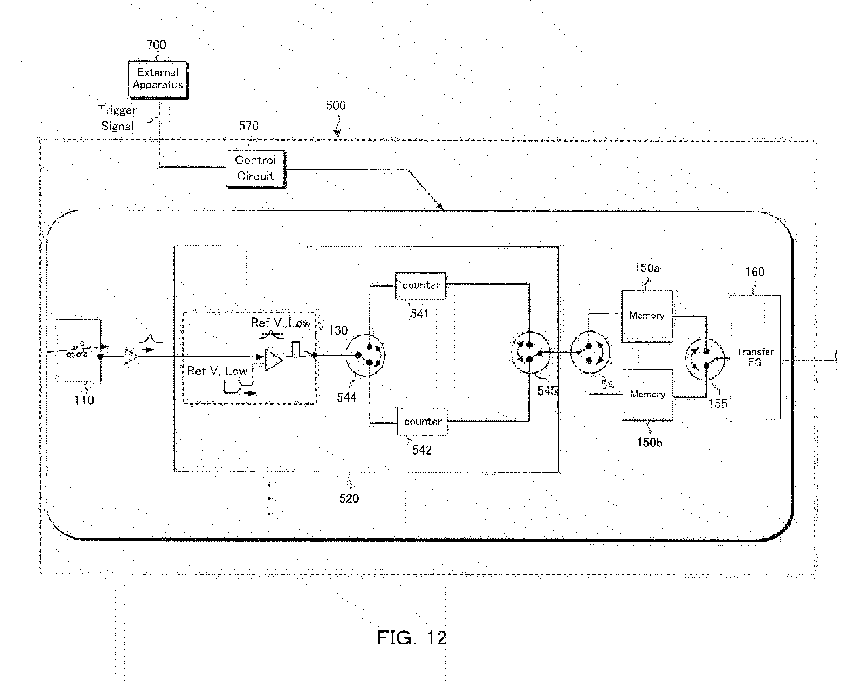

According to the above-described embodiment, one counter is provided for one detection circuit, however a plurality of switchable counters may be provided for one detection circuit. In this case, dead time of exposure can be made to be zero by switching a counter, and thus continuous exposure becomes possible. FIG. 12 is a schematic diagram showing a configuration of a radiation detector provided with two counters.

The radiation detector 500 is constituted similarly to the radiation detector 100, except that counters 541 and 542, switching circuits 544 and 545, and a control circuit 570 are used. The counters 541 and 542 may have an equivalent function to each other, and count pulses. In addition, in an example shown in FIG. 12, though two counters 541 and 542 are provided for one detection circuit 130, three counters and more may be provided.

The control circuit 570 performs switching of a counter to count the pulses among a plurality of the counters 541 and 542 for one detection circuit, when receiving a synchronization signal from an external apparatus 700. In this manner, the radiation can be detected with no generation of dead time by maintaining an exposure state where the radiation is continuously made incident. Similarly to the control circuit 170, the control circuit 570 controlling connection of each of switching circuits 154 and 155 controls reading and storing of count values, and transferring the stored count values to the external apparatus.

As a synchronization signal from the external apparatus 700, for example, a trigger signal for specifying time or a position can be received. In this manner, for example, an operation timing of the external apparatus, a direction signal for moving the arm of a goniometer, and counter switching according to a signal at each predetermined time or a position as an analysis object are made possible.

### (Operation of radiation detector)

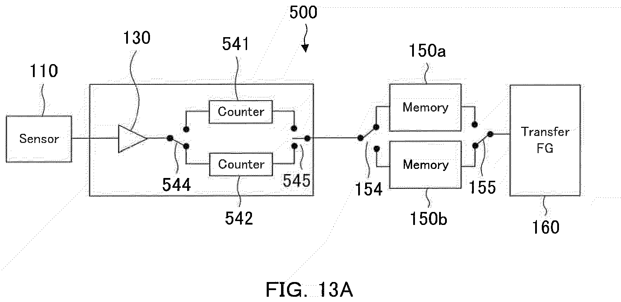

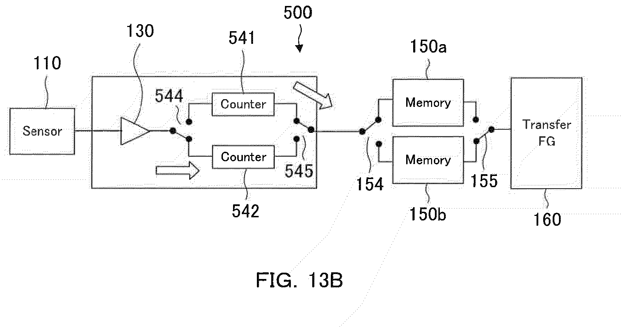

FIGS. 13A to 13D are schematic diagrams each showing an operation of a radiation detector. Though the same configuration shown in FIG. 12 is actually applied, for simplification, each of the diagrams is represented with a single detection circuit. As shown in FIGS. 13A and 13B, the counter 542 counts pulses via connection of the switching circuit 544; and the memory 150a reads the count values that have already been counted by the counter 541, via connection of the switching circuit 545.

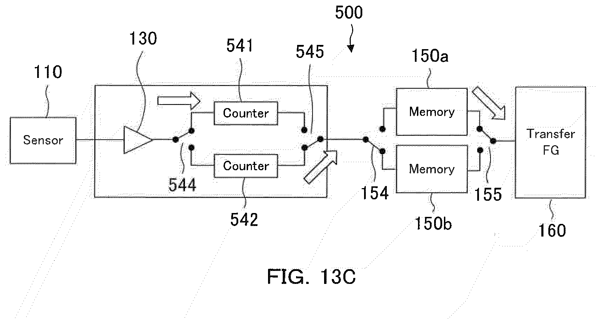

Next, as shown in FIG. 13C, all the connections of switching circuits 544, 545, 154, and 155 are switched. In this manner, the counter 541 connected to the detection circuit 130 counts pulses, and the memory 150b reads the count values that have already been counted by the counter 542. The memory 150a simultaneously transfers the read count values.

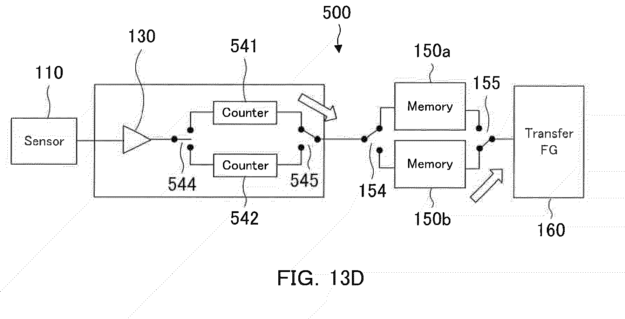

Then, as shown in FIG. 13D, the switching circuit 544 is switched, and all the connections of switching circuits 545, 154, and 155 are switched. In this manner, the memory 150a reads count values generated by the counter 541. On the other hand, the memory 150b transfers the read count values. Continuous exposure can be performed by repeating such an operation, while improving the frame rate.

### (Timing chart)

FIG. 14 shows a timing chart of an operation of a radiation detector provided with two counters 541 and 542. Common control signals shown in FIG. 14 indicate a signal for opening/closing of a radiation shutter and a trigger signal from the external apparatus, respectively. As shown in the figure, the shutter is maintained to be always in an open state.

In examples shown in FIGS. 13A to 13D, radiation is detected via continuous exposure with no dead time by using the two counters and switching them alternately. The counter 541 starts counting at a rising edge of a trigger signal. Further, the counter 542 is initially in a waiting state, and counting is started after the counters are switched at the rising edge of the next trigger signal. Further, reading of the counter 541 that has finished counting is started simultaneously with switching thereof. Thereafter, by using the rising edge of the trigger signal, the counters can be switched alternately, and reading count data can be performed. Counting time of each of the counter 541 and the counter 542 is continued without having any dead time.

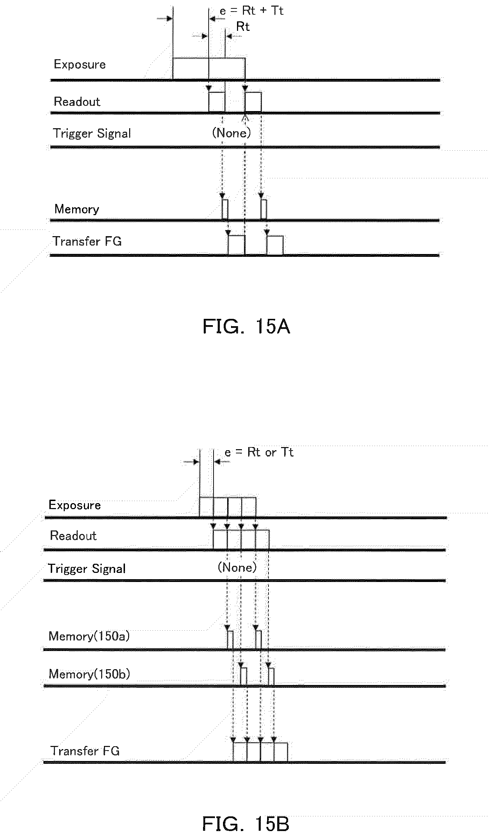

FIGS. 15A and 15B each show a timing chart of each operation, according to a conventional radiation detector and a radiation detector 500, respectively. It is applied thereto that with respect to the conventional radiation detector, switching of the memory is performed by the radiation detector 500, similarly to examples shown in FIGS. 6A and 6B. Further, in any of timing charts, exposure is not interrupted by performing switching of counters. In this manner, continuous exposure can be performed while improving the frame rate, and thus for example, observation of a bunch structure of electron beams, that has conventionally been difficult, is facilitated as described later.

### [Sixth embodiment]

The radiation detector according to the present invention is preferably used for X-ray photon correlation spectroscopy (XPCS). When phase-aligned coherent X-rays are made incident on a substance, there appears a spotted scattering image (speckle pattern) corresponding to local structure information. The speckle pattern is fluctuated due to generation of change and fluctuation in local structure, even though no average structure is changed during the experiment. This speckle pattern is measured in time division to obtain information about the structure time change. This X-ray photon correlation spectroscopy means a method of evaluating a kinetic property on such a principle.

According to the X-ray photon correlation spectroscopy, time fluctuation of scattering intensity is analyzed using an autocorrelation function to analyze time fluctuation of an electron density distribution in a sample. In this manner, information about a size distribution in an uneven region as well as an average speed of motion can be obtained in a system of producing nanometer scale structure fluctuation (dynamics).

The autocorrelation function uses scattering intensity I (t) with respect to arbitrary time (t) as a reference, and represents a correlation with scattering intensity I (t + T) at a (T) time later. The intensity is related with a position pattern of particles, and thus by the existence of a high correlation between the intensities at two different times, it is meant that a particle move between two measurements for positions that are not so distant from each other.

When T is small, the particles hardly move, and thus change in intensity of scattering ray is small and the correlation is high. When T is large, particle positions are uncertain, and thus the scattering intensity is random and the correlation is low. Thus, the autocorrelation function obtained by the experiment is an exponential decay curve.

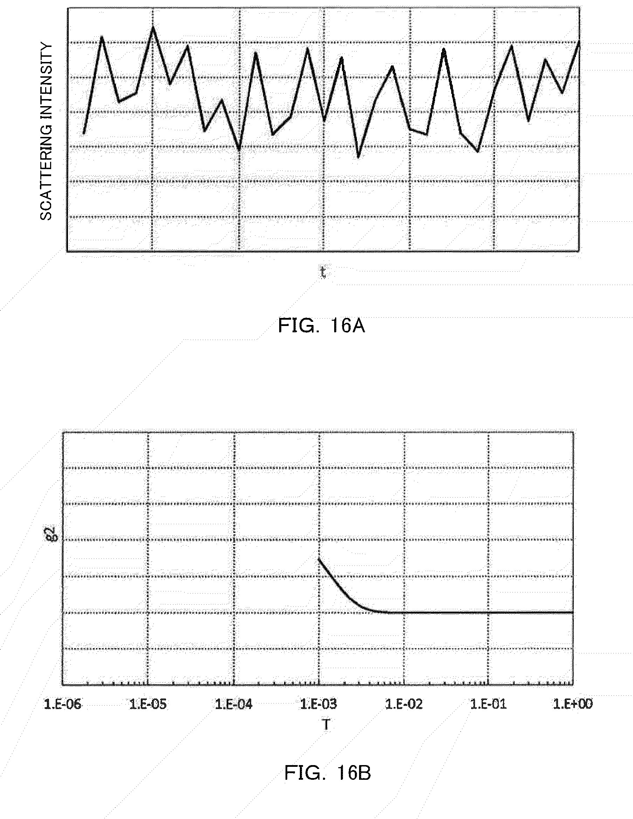

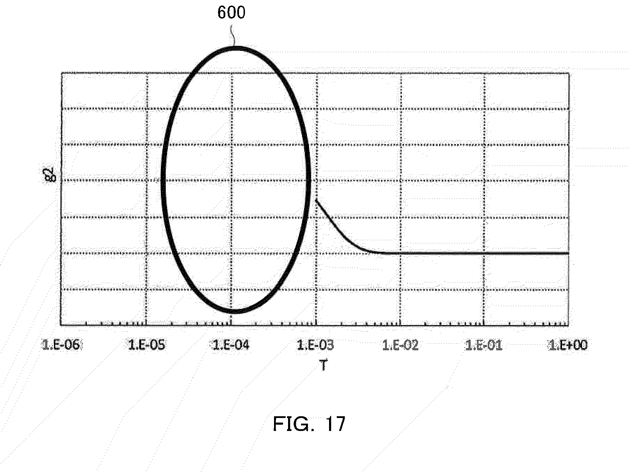

FIGS. 16A and 16B are graphs showing scattering intensity and autocorrelation function g2 thereof with respect to time, respectively, that are measured by a detector with a low frame rate. Further, Fig. 17 is a graph showing a region where T is small, according to an autocorrelation function. The autocorrelation function value when T is extremely small is impossible to be measured, and thus it can be assumed that particles hardly move, however if there is a detector with a high frame rate, the region 600 where T is small as shown in FIG. 17 is actually measurable. As the frame rate is higher, such a region where T is small can be more confirmed as an autocorrelation function value.

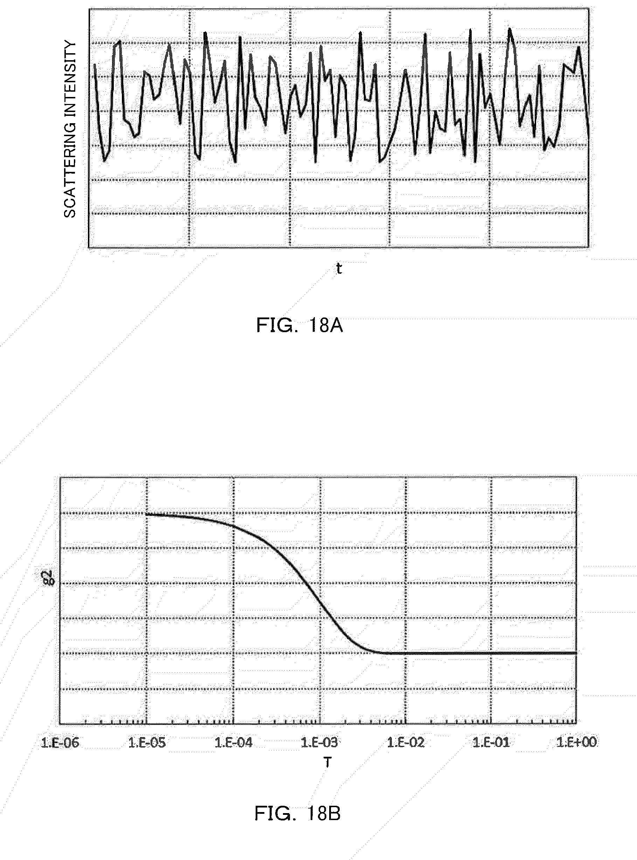

FIGS. 18A and 18B are graphs showing scattering intensity and autocorrelation function g2 thereof with respect to time, respectively, that are measured by a detector with a high frame rate. As shown in FIGS. 18A and 18B, as to the detector according to the present invention, the region where T is small, that has not been actually measurable so far, can be confirmed via the improvement of frame rate.

### [Seventh embodiment]

### (Application to large-scale synchrotron radiation facilities)

The radiation detector according to the present invention is suitably used in experimental facilities for utilizing a series of accelerators with which electrons are accelerated and stored, and synchrotron radiation generated therein; and in large-scale synchrotron radiation facilities such as Spring-8 provided with various auxiliary facilities. In that case, the radiation detector according to the present invention is assembled as part of a synchrotron radiation detection apparatus in the large-scale synchrotron radiation facilities.

For example, according to Spring-8, an electron beam generated from an electron gun is accelerated to 1 GeV with a linear accelerator, and is subsequently introduced into a synchrotron to be accelerated to 8 GeV. This electron beam is introduced into a storage ring, and synchrotron radiation is generated by a deflection electromagnet or an insertion radiation source while maintaining an energy of 8 GeV. The generated synchrotron radiation is introduced into an experimental station provided inside and outside a storage ring house through a beam line. In addition, basically, the electron beam is not continuously present inside the storage ring, however is present as becoming an aggregate referred to as bunch.

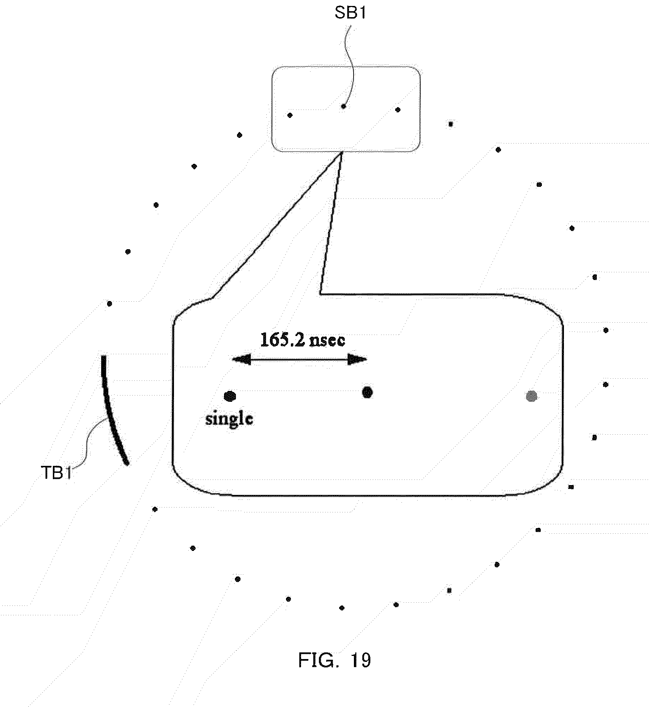

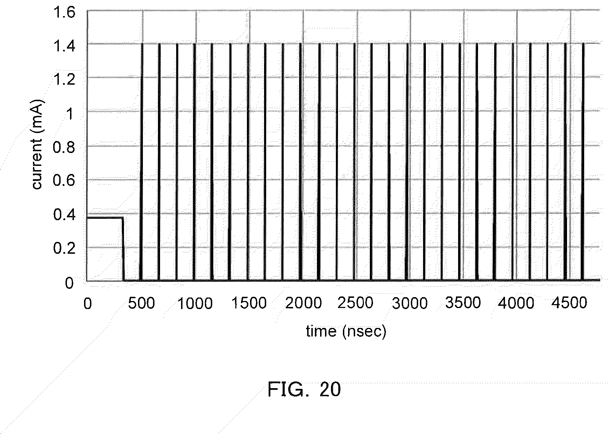

FIG. 19 is a diagram showing an example of a filling pattern in a storage ring. Further, FIG. 20 is a diagram showing detection current of the bunch with respect to time. Specifically, a filling pattern of 2018A (2018 first half) several bunch operation mode (E mode) of Spring-8 is shown. A single bunch SB1 as a bunch of dotted electrons and a train bunch TB1 linearly connecting a bunch of electrons appear in the filing pattern shown in FIG. 19. The bunch flying interval in this operation mode is 165.2 nsec, and as shown in FIG. 20, the trapezoidal train bunch and the peak-like single bunch appear at the above-described time interval.

As to the radiation detector according to the present invention, the minimum interval time of exposure can be shortened, and thus it is made possible to confirm the bunch structure by synchronizing the bunch structure of synchrotron radiation facilities with the operation of a detector.

### [Experiment]

Synchrotron radiation of Spring-8 was detected using the radiation detector according to the present invention. One round time of the synchrotron radiation is 4.7908 µsec, and the count rate is approximately 100 Mcps. In contrast to such a bunch operation mode, the bunch was detected by the radiation detector provided with a radiation detector at a one time minimum exposure time of 110 nsec, a readout circuit (ROIC) at a readout time of 95.816 psec, and one or two memories.

As a result, one time exposure was detected at a frame rate of 5.2 kfps for 40 rounds (191.632 µsec), when using the radiation detector provided with one memory. On the other hand, one time exposure was detected at a frame rate of 10.4 kfps for 20 rounds (95.816 psec), when using the radiation detector provided with two memories.

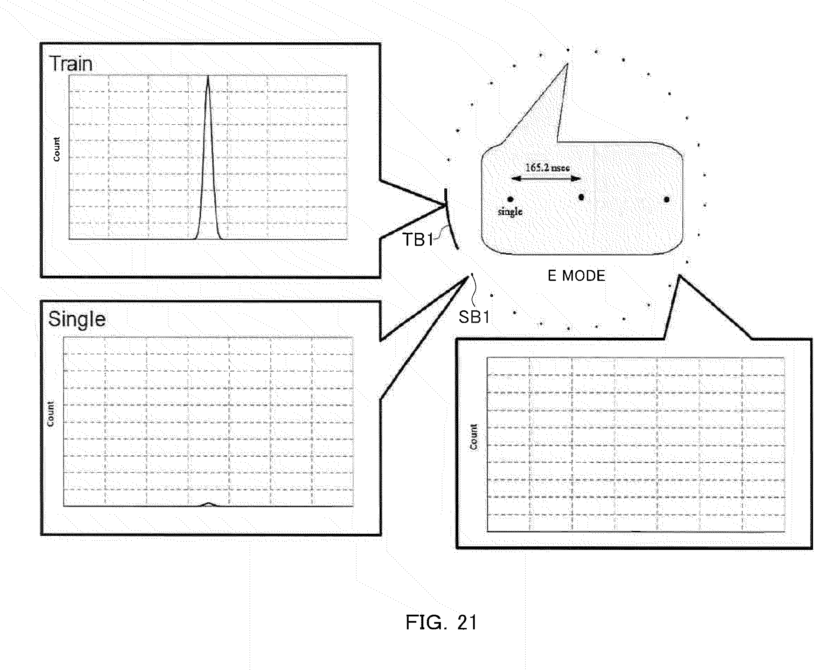

FIG. 21 is a diagram showing X-ray intensity peaks detected when using two memories with respect to a filling pattern. As shown in FIG. 21, X-ray intensity peaks of the single bunch SB1 and the train bunch TB1 were acquired with sufficient accuracy, in contrast to the flat inter-bunch X-ray intensity.

### EXPLANATION OF THE SYMBOLS

100, 200, 500 Radiation detector
110 Sensor
120 Readout circuit
125, 154, 155, 544, 545 Switching circuit
130a, 130b, 130 Detection circuit
140, 140a, 140b, 541, 542 Counter
150a, 150b, 250a to 250d Memory
160 Transfer circuit
165 Interface
170, 570 Control circuit
Rt Readout time
Tt Transfer time
300, 400 X-ray analysis apparatus
310, 410 X-ray source
320 Sample stage
330 Arm
340, 440 Control section
420 Roller
425 Belt
50 Sample
S1 Product
600 Region where T is small
700 External apparatus
SB1 Single bunch
TB1 Train bunch

## Claims

1. A radiation detector (100, 200, 500) that detects radiation to transfer detection data to an external apparatus for each frame, comprising:
a sensor (110) that generates a pulse when a radiation particle is detected;
a plurality of counters (140a, 140b, 541, 542) that are provided in a readout circuit (120) and count the generated pulses;
a plurality of memories (150a, 150b, 250a-250d) that respectively read and store count values counted for each frame by the plurality of counters (140a, 140b, 541, 542);
a control circuit (170, 570) that controls transferring the stored count values for each frame to the external apparatus from the memories (150a, 150b, 250a-250d),
a first switching circuit (125, 154, 545) that performs a switching operation for reading count values from the plurality of counters by one of the plurality of memories (150a, 150b, 250a-250d), and
a second switching circuit (155) that performs a switching operation for transferring the count values from one of the plurality of memories (150a, 150b, 250a-250d),
wherein the control circuit (170, 570) controls the first and second switching circuits (125, 154, 545; 155) to simultaneously read the count values for a first frame to a first memory and transfer the count values for a second frame different from the first frame from a second memory different from the first memory in a parallel processing time period.

2. The radiation detector (100, 200, 500) according to claim 1,
wherein the plurality of memories (150a, 150b, 250a-250d) each are independent of each other, and wherein storing into and transferring from the same address of the memory cannot be simultaneously performed.

3. The radiation detector (100, 200, 500) according to claim 1 or 2,
wherein the plurality of memories (150a, 150b, 250a-250d) are three memories or more.

4. The radiation detector (100, 200, 500) according to any one of claims 1 to 3,
wherein the control circuit (170, 570) performs switching of a counter to count the pulses among the plurality of counters (140a, 140b, 541, 542) at a timing of receiving a trigger signal from the external apparatus, and performs continuous exposure.

5. A radiation detection method for detecting radiation to transfer detection data to an external apparatus for each frame, the method comprising the steps of:
generating a pulse when a radiation particle is detected;
counting the generated pulses with a plurality of counters (140a, 140b, 541, 542) provided in a readout circuit (120);
respectively reading and storing count values obtained for each frame by the plurality of provided counters (140a, 140b, 541, 542) via a plurality of memories (150a, 150b, 250a-250d); and
controlling transferring the stored count values for each frame to the external apparatus from the memories (150a, 150b, 250a-250d),
wherein a first switching circuit (125, 154, 545) that performs a switching operation for reading count values from the plurality of counters by one of the plurality of memories (150a, 150b, 250a-250d), and a second switching circuit (155) that performs a switching operation for transferring the count values from one of the plurality of memories (150a, 150b, 250a-250d) are controlled to simultaneously read the count values for a first frame to a first memory and transfer the count values for a second frame different from the first frame from a second memory different from the first memory in a parallel processing time period.

6. The radiation detection method according to claim 5,
comprising the detecting performed by a synchrotron radiation detection apparatus,
wherein the radiation is synchrotron radiation generated from accelerated electrons.

## Patentansprüche

1. Strahlungsdetektor (100, 200, 500), der Strahlung detektiert, um Detektionsdaten für jeden Frame an eine externe Vorrichtung zu übertragen, umfassend:
einen Sensor (110), der einen Impuls erzeugt, wenn ein Strahlungspartikel detektiert wird;
eine Vielzahl von Zählern (140a, 140b, 541, 542), die in einem Ausleseschaltkreis (120) vorgesehen sind und die erzeugten Impulse zählen;
eine Vielzahl von Speichern (150a, 150b, 250a-250d), die jeweils Zählwerte lesen und speichern, die für jeden Frame von der Vielzahl von Zählern (140a, 140b, 541, 542) gezählt werden;
einen Steuerkreis (170, 570), der ein Übertragen der gespeicherten Zählwerte für jeden Frame von den Speichern (150a, 150b, 250a-250d) an die externe Vorrichtung steuert,
einen ersten Schaltkreis (125, 154, 545), der einen Schaltvorgang zum Lesen von Zählwerten von der Vielzahl von Zählern durch einen der Vielzahl von Speichern (150a, 150b, 250a-250d) durchführt, und
einen zweiten Schaltkreis (155), der einen Schaltvorgang zum Übertragen der Zählwerte von einem der Vielzahl von Speichern (150a, 150b, 250a-250d) durchführt,
wobei der Steuerkreis (170, 570) den ersten und den zweiten Schaltkreis (125, 154, 545; 155) steuert, um gleichzeitig die Zählwerte für einen ersten Frame in einen ersten Speicher zu lesen und die Zählwerte für einen zweiten Frame, der sich von dem ersten Frame unterscheidet, von einem zweiten Speicher, der sich von dem ersten Speicher unterscheidet, in einer parallelen Verarbeitungszeitperiode zu übertragen.

2. Strahlungsdetektor (100, 200, 500) nach Anspruch 1,
wobei die Vielzahl von Speichern (150a, 150b, 250a-250d) jeweils unabhängig voneinander sind, und wobei ein Speichern in und Übertragen von derselben Adresse des Speichers nicht gleichzeitig durchgeführt werden kann.

3. Strahlungsdetektor (100, 200, 500) nach Anspruch 1 oder 2,
wobei die Vielzahl von Speichern (150a, 150b, 250a-250d) drei oder mehr Speicher sind.

4. Strahlungsdetektor (100, 200, 500) nach einem der Ansprüche 1 bis 3,
wobei der Steuerkreis (170, 570) ein Umschalten eines Zählers zum Zählen der Impulse unter der Vielzahl von Zählern (140a, 140b, 541, 542) zu einem Zeitpunkt des Empfangens eines Triggersignals von der externen Vorrichtung durchführt und eine kontinuierliche Exponiertheit durchführt.

5. Strahlungsdetektionsverfahren zum Detektieren von Strahlung, um Detektionsdaten für jeden Frame an eine externe Vorrichtung zu übertragen, wobei das Verfahren die Schritte umfasst:
Erzeugen eines Impulses, wenn ein Strahlungspartikel detektiert wird;
Zählen der erzeugten Impulse mit einer Vielzahl von Zählern (140a, 140b, 541, 542), die in einem Ausleseschaltkreis (120) vorgesehen sind;
jeweiliges Lesen und Speichern von Zählwerten, die für jeden Frame durch die Vielzahl von vorgesehenen Zählern (140a, 140b, 541, 542) erhalten werden, über eine Vielzahl von Speichern (150a, 150b, 250a-250d); und
Steuern des Übertragens der gespeicherten Zählwerte für jeden Frame von den Speichern (150a, 150b, 250a-250d) an die externe Vorrichtung,
wobei ein erster Schaltkreis (125, 154, 545), der einen Schaltvorgang zum Lesen von Zählwerten von der Vielzahl von Zählern durch einen der Vielzahl von Speichern (150a, 150b, 250a-250d) durchführt, und ein zweiter Schaltkreis (155), der einen Schaltvorgang zum Übertragen der Zählwerte von einem der Vielzahl von Speichern (150a, 150b, 250a-250d) durchführt, so gesteuert werden, dass sie gleichzeitig die Zählwerte für einen ersten Frame an einen ersten Speicher lesen und die Zählwerte für einen zweiten Frame, der sich von dem ersten Frame unterscheidet, von einem zweiten Speicher, der sich von dem ersten Speicher unterscheidet, in einer parallelen Verarbeitungszeitspanne übertragen.

6. Strahlungsdetektionsverfahren nach Anspruch 5,
umfassend das Detektieren, das durch eine Synchrotronstrahlungs-Detektionsvorrichtung durchgeführt wird,
wobei die Strahlung eine Synchrotronstrahlung ist, die von beschleunigten Elektronen erzeugt wird.

## Revendications

1. Détecteur de rayonnement (100, 200, 500) qui détecte un rayonnement pour transférer des données de détection vers un appareil externe pour chaque trame, comprenant :
un capteur (110) qui génère une impulsion lorsqu'une particule de rayonnement est détectée ;
une pluralité de compteurs (140a, 140b, 541, 542) qui sont disposés dans un circuit de lecture (120) et qui comptent les impulsions générées ;
une pluralité de mémoires (150a, 150b, 250a-250d) qui lisent et qui stockent respectivement des valeurs de décompte comptées pour chaque trame par la pluralité des compteurs (140a, 140b, 541, 542) ;
un circuit de commande (170, 570) qui commande le transfert des valeurs de décompte stockées pour chaque trame vers l'appareil externe à partir des mémoires (150a, 150b, 250a-250d),
un premier circuit de commutation (125, 154, 545) qui effectue une opération de commutation pour lire des valeurs de décompte à partir de la pluralité des compteurs par l'une de la pluralité des mémoires (150a, 150b, 250a-250d), et
un second circuit de commutation (155) qui effectue une opération de commutation pour transférer les valeurs de décompte de l'une de la pluralité des mémoires (150a, 150b, 250a-250d),
le circuit de commande (170, 570) commandant le premier et le second circuit de commutation (125, 154, 545 ; 155) pour lire simultanément les valeurs de décompte pour une première trame vers une première mémoire et transférer les valeurs de décompte pour une seconde trame différente de la première trame à partir d'une seconde mémoire différente de la première mémoire dans une période de temps de traitement parallèle.

2. Détecteur de rayonnement (100, 200, 500) selon la revendication 1,
la pluralité des mémoires (150a, 150b, 250a-250d) étant chacune indépendantes l'une de l'autre, et le stockage à l'intérieur et le transfert depuis la même adresse de la mémoire ne pouvant pas être effectués simultanément.

3. Détecteur de rayonnement (100, 200, 500) selon la revendication 1 ou 2,
la pluralité des mémoires (150a, 150b, 250a-250d) étant de trois mémoires ou plus.

4. Détecteur de rayonnement (100, 200, 500) selon l'une quelconque des revendications 1 à 3,
le circuit de commande (170, 570) effectuant une commutation d'un compteur pour compter les impulsions parmi la pluralité des compteurs (140a, 140b, 541, 542) à un moment de réception d'un signal de déclenchement depuis l'appareil externe, et effectuant une exposition continue.

5. Procédé de détection de rayonnement pour détecter un rayonnement pour transférer des données de détection à un appareil externe pour chaque trame, le procédé comprenant les étapes consistant à :
générer une impulsion lorsqu'une particule de rayonnement est détectée ;
compter les impulsions générées avec une pluralité de compteurs (140a, 140b, 541, 542) disposés dans un circuit de lecture (120) ;
lire et stocker respectivement des valeurs de décompte obtenues pour chaque trame par la pluralité des compteurs (140a, 140b, 541, 542) prévus par l'intermédiaire d'une pluralité de mémoires (150a, 150b, 250a-250d) ; et
commander un transfert des valeurs de décompte stockées pour chaque trame vers l'appareil externe à partir des mémoires (150a, 150b, 250a-250d),
un premier circuit de commutation (125, 154, 545) qui effectue une opération de commutation pour lire des valeurs de décompte à partir de la pluralité des compteurs par l'une de la pluralité des mémoires (150a, 150b, 250a-250d), et un second circuit de commutation (155) qui effectue une opération de commutation pour transférer les valeurs de décompte depuis l'une de la pluralité des mémoires (150a, 150b, 250a-250d) étant commandées pour lire simultanément les valeurs de décompte pour une première trame vers une première mémoire et transférer les valeurs de décompte pour une seconde trame différente de la première trame à partir d'une seconde mémoire différente de la première mémoire dans une période de temps de traitement parallèle.

6. Procédé de détection de rayonnement selon la revendication 5,
comprenant la détection effectuée par un appareil de détection de rayonnement synchrotron,
le rayonnement étant un rayonnement synchrotron généré à partir d'électrons accélérés.
